# EUROPEAN PATENT APPLICATION

(11) **EP 0 608 011 A1**
(43) Date of publication of application: **27.07.1994**
(21) Application number: 94200004.3
(22) Date of filing: 04.01.1994
(51) Int. Cl.: H04Q 1/50, H04Q 3/76, H04J 3/12

(54) **Communication between a telephone exchange and connected telephone sets**

(30) Priority: 20.01.1993 SE 9300155
(71) Applicant: TELEFONAKTIEBOLAGET LM ERICSSON, S-126 25 Stockholm (SE)
(72) Inventor: Lindström, Anders Olof, S-162 45 Vällingby (SE); Boström, Anna Kristina, S-171 40 Solna (SE); Broberg, Hans Magnus, S-126 37 Hägersten (SE)
(74) Representative: Rosenquist, Per Olof

(57) **Abstract**

s7 In the connection of a number of telephone sets (1) to a private branch exchange (3) control information is communicated between the telephone sets and the exchange set in such a way that a bidirected conversion unit (19) is required. In order to provide a high degree of service at a reasonable cost the telephone sets (3) are collected in groups which share a generally small number of conversion units. By means of suitable control means (17) and switch units (15, 21) in the forwarding of control information, a suitable non-occupied conversion unit (19) can be selected.

## Description

### FIELD OF THE INVENTION

The present invention is related to communication between a telephone exchange, typically a private branch exchange, and telephone sets connected thereto.

### BACKGROUND OF THE INVENTION

In private branch exchanges, where communication between the exchange and the telephone sets connected thereto is performed in a digital way and by means of serial communication, serial control information, which is sent e.g. from a telephone set to the telephone exchange, must be converted to another suitable form, e.g. to parallel form, in order to be able to be processed by control circuits associated with the exchange and in certain cases the control logic of the telephone exchange itself. Also the corresponding control information, which is issued from the telephone exchange, must be converted from the internal digital format of the exchange to serial signals on the line near the telephone sets connected to the exchange. Therefore, for each telephone set coupled to the exchange and its connecting line a line circuit is arranged performing conversion of the signals to a format suitable to the receiver. Such conversion circuits are since long time known as conventional construction elements and they perform conversion from digital signals in parallel form to digital signals forwarded in a serial form and the opposite.

The provision of a conversion unit for each telephone line may be rather costly, in particular considered from the viewpoint that each conversion unit in many cases is not used very often. An alternative solution to the conversion problem is then that a number of telephone sets share one common conversion unit. This solution can, however, result in problems, when several telephone sets in a group are to use, at the same time, the common conversion unit.

Prior art close to the invention may be found in the patents US A 4,726,054, US-A 4,325,147, US-A 4,630,232, and US-A 4,365,293.

### DESCRIPTION OF THE INVENTION

It is a purpose of the invention to provide a telephone network and exchange having a reduced number of conversion units and still giving a high degree of service.

According to the invention a telephone exchange and a telephone exchange network are provided having an enhanced capacity and an improved flexibility in the communication with the individual telephone sets coupled to the telephone exchange. The features and scope of the invention appear from the appended patent claims.

Instead of, as in the alternative solution mentioned above, arranging that a number of telephone lines share a common conversion unit, a number of telephone sets are arranged to share a number of conversion units, the number of conversion units thus being greater than one. If in a prior telephone exchange layout one conversion unit was arranged for four telephone lines, instead e.g. four conversion units can be arranged for a group of 16 telephone lines. The assignment of a conversion unit for a message or a digital signal sequence issued from or to be forwarded to a telephone set is performed by means of specific control means and switches or multiplex- ers/demultiplexers controlled by the control means. By means of such an arrangement a high degree of service can be provided for communication with the individual telephone sets at a reasonable cost.

In particular, there is in a telephone network telephone exchange having a number of telephone sets coupled to the exchange. A first kind of information, such as the control information mentioned above, has such a form that for its communication between the exchange and/or control logic arranged in or at the exchange and the telephone sets a conversion unit is required. A number of telephone sets are coupled to the exchange unit through a common line board and they are thus collected in a group. On each such line board, for a group, there are several conversion units of the kind mentioned above. The number of such conversion units can preferably be smaller than the number of telephone sets in the group and is always greater than one. Control means on the line board control switch units which are connected between the conversion unit and the exchange unit itself and between the conversion units and the telephone sets in the group, such that when the mentioned information of the first kind must be converted, it is assigned a signal path through a suitable, not occupied conversion unit.

The communication to and from the telephone sets is preferably performed only serially at the lines near the telephone sets and then certain serial signal sequences represent the mentioned first information or control information and other signal sequences acoustic information, which is forwarded between the telephone set and the exchange, and also other "user information" such as information sent from and to a data modem connected at a telephone set.

### BRIEF DESCRIPTION OF THE DRAWINGS

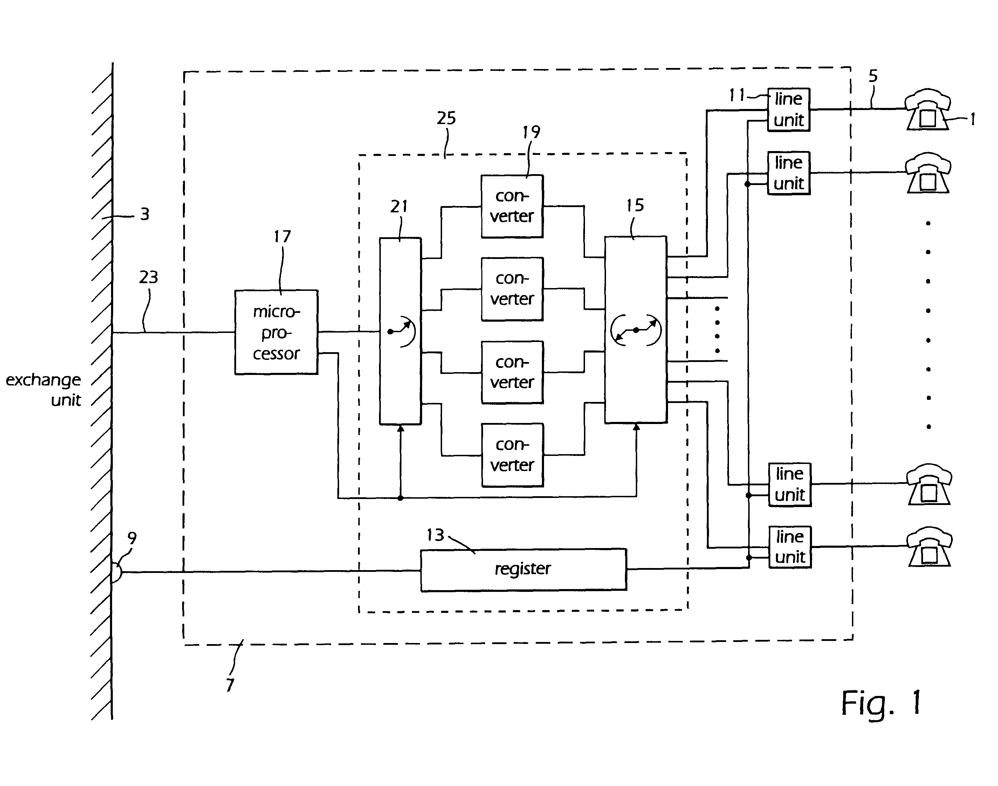

The invention will now be described with reference to an exemplary embodiment, only for illustration of the invention, which is illustrated in the accompanying drawing, in which - Fig. 1 is a block diagram of the communication between a telephone exchange and the telephone sets connected thereto.

### DESCRIPTION OF THE PREFERRED EMBODIMENT

As is illustrated in Fig. 1, a number of telephone sets 1 are connected to an exchange unit 3 such as a private branch exchange or PBX. The communication of all signals and messages between the telephone set 1 and the central exchange unit 3 is performed digitally. It means, that acoustic information like a spoken message in a microphone belonging to a telephone set 1 in some way is converted to digital form, e.g. by means of PCM. In the corresponding way a suitable digital signal sequence, which is received from a telephone set 1, is converted to an acoustic message and is transferred to the ear telephone associated with a telephone set 1.

Also digital information, which is originates from or is received by a user through for instance a telephone modem (not shown) connected at a telephone set 1, is forwarded serially from and to the telephone set.

Except such information, which a user wishes to transfer, i.e. send and receive, between the telephone sets 1 and the exchange unit 3 also other signal or control information is communicated. Typical such information is the signal, which is sentfrom a telephone set, when it by a person dialling a connection number, is to establish communication with another telephone set, which is e.g. also connected to the exchange unit 3. In addition the exchange 3 can in the conventional way be connected to the public telephone network (not shown).

From the individual telephone sets 1 lines 5, which allow bidirectional communication, lead to a line board 7, which is connected to the exchange unit 3 and in the conventional way is mounted in a socket (not shown) provided therefor in the exchange. The line board 7 performs the signal processing which is necessary in order to separate the different kinds of forwarded digital information and to convert this information to a suitable electric representation. Inside the exchange unit 3 then the various digital messages are communicated, which represent acoustic messages and other user messages, between ports 9 of the exchange unit 3.

The line board 7 thus comprises a line unit 11 for each connected telephone set 1 with its associated connection line 5. In the line unit 11 the digital information representing different kinds of control information is separated from the digital information representing acoustic messages and other user information, in the digital signal stream originating from the telephone set. The signal stream is in the conventional way of the serial type. The serial information representing a small portion of an acoustic message or of another user information, is transferred to a register 13 for an intermediate storing therein, before this portion is forwarded to the port 9 of the exchange unit 3 to be transferred to another port or possibly the same port of the exchange unit 3. All line units 11 on the line board 7 are connected to the same register 13. Suitable functions are arranged here to keep an account of the various signal sequences originating from different telephone sets 1, e.g. by arranging that each telephone set is assigned periodically repeated time slots.

The line units 11 transfer the serial information corresponding to control signals originating from a telephone set, to a multiplexer/demultiplexer or switch unit 15. In the switch unit 15 the information is communicated, controlled by a microprocessor 17, to one of a number of serial to parallel or parallel to serial converters 19. Only a small number of such bidirected converters 19 are arranged, i.e. the number thereof is generally a small part of the total number of connected telephone sets 1. A practical example may be that 16 different telephone sets 1 are connected to one line board 7 and that the line board 7 contains four bidirected converters 19. The serial digital signal sequence received by a bidirected converter 19 is converted therein to a parallel form and is fetched from the converter 19 through a second multiplexer/demultiplexer or switch unit 21 by the microprocessor 17. The microprocessor 17 processes the received information. If this information e.g. contains a request of establishing a connection to another connection point, the microprocessor 17 forwards a message thereof to the exchange unit 3 on a connection line 23 to the exchange.

Several of the components on the line board 7, i.e. the two switches 21 and the bidirected converters 19 and the register 13, can suitably be constructed on a single integrated circuit 25.

In the opposite case, when the microprocessor 17 is to send control information to a telephone set 1, the microprocessor 17, by means of a control line to the second switch 21, selects a signal path to a non-occupied bidirected converter 19. In it the information from the microprocessor 17 is converted to a serial shape and is then forwarded through the first switch 15, controlled by a signal on a control line from the microprocessor 17, to the correct line unit, which is connected to the desired telephone set 1.

If a connected telephone set 1 is to be given a particularly high priority, this telephone set 1 can be more or less permanently assigned an own bidirected converter 19. Thereby is ensured that control messages to and from this telephone set always can be processed rapidly by the line board 7.

## Claims

1. A telephone network comprising a number of telephone sets connected to an exchange, a first kind of information between a telephone set and the exchange being sent in such a shape that therefor a conversion unit is required, characterized in
- that the telephone sets are collected in groups,
- that for each group there is a number of conversion units, this number being greater than one,
- that a switch unit is connected between the number of conversion units and the exchange and a switch unit between the number of conversion units and a group of telephone sets associated with the number of conversion units, and
- that control means are arranged for control of the switch units in order to assign to information of the first kind, which is to be forwarded, a signal path between a telephone set and the exchange through a conversion unit which is not already occupied.

2. A telephone network according to claim 1, characterized in that the number of conversion units is less than the number of telephone sets in the group.

3. A telephone network according to one of claims 1 - 2, characterized in
- that the telephones are arranged to communicate information of a digital kind by means of serial communication and
- that the conversion units are constituted by converters converting digital data from serial to parallel from and from parallel to serial form.

4. A telephone network according to one of claims 1 - 3, characterized in that each telephone set is connected to a switch unit through a line unit, which taps information of the first kind from the signals, which are sent from the telephone, and also enters information of the first kind in signals, which are sent to the telephone set.

5. A telephone network according to claim 4, characterized in that the signals which are sent from and to a telephone set includes signals which represent acoustic messages.

6. A telephone network according to claim 4, characterized in that the signals which are sent from and to a telephone, include signals representing digital information for communication between users such as information originating from a telephone modem.

7. A telephone exchange with telephone sets connected thereto which are arranged for forwarding a first kind of information between a telephone set and the exchange in such a shape that a conversion unit is required therefore, characterized in
- that the telephones are collected in groups,
- that for each group there is a number of conversion units, this number being greater than one,
- that a switch unit is connected between the number of conversion units and the exchange and a switch unit between the number of conversion units and the group of telephone sets associated with a number of conversion units, and
- that control means are arranged for control of the switch units for assigning to information of the first kind, which is to be forwarded, a signal path between a telephone set and the telephone exchange through a conversion unit which is not already occupied.

8. A telephone exchange according to claim 7, characterized in that the number of conversion units is less than the number of telephone sets in the group.

9. A telephone exchange to one of claims 7 - 8, characterized in
- that the telephones are arranged for communicating information of a digital kind by means of serial communication and
- that the conversion units are constituted by converters for digital data from serial to parallel form and from parallel to serial form.

10. A telephone exchange according to one of claims 7 - 9, characterized in that each telephone set is connected to a switch unit through a line unit, which taps information of the first kind from signals, which are sent from the telephone and also enters information of the first kind in signals sent to the telephone set.

11. A telephone exchange according to claim 10, characterized in that the signals which are sent from and to a telephone set include signals representing acoustic messages.

12. A telephone exchange according to claim 10, characterized in that the signals which are sent from and to a telephone set include signals representing digital information for communication between users such as information originating from a telephone modem.
